# EUROPEAN PATENT SPECIFICATION

(11) **EP 0 898 677 B1**
(45) Date of publication and mention of the grant of the patent: **07.06.2000**
(21) Application number: 97925409.1
(22) Date of filing: 24.04.1997
(51) Int. Cl.: F16L 25/00

(54) **COUPLING FOR CORRUGATED TUBING**
VERBINDUNG FÜR WELLROHR
JOINT POUR TUBE ONDULE

(30) Priority: 09.05.1996 US 17227 P
(43) Date of publication of application: 03.03.1999
(73) Proprietor: PARKER-HANNIFIN CORPORATION, Cleveland, Ohio 44112 (US)
(72) Inventor: SWEENEY, Michael, A., Kent, OH 44240 (US)
(74) Representative: Purvis, William Michael Cameron
(86) International application number: PCT/US97/06707
(87) International publication number: WO 97/42442

(56) References cited:
- EP-A- 0 331 116
- FR-A- 2 589 979
- US-A- 4 630 850

## Description

### BACKGROUND OF THE INVENTION

The present invention relates generally to a coupling for connecting corrugated tubing with a fitting, and more particularly to a coupling which includes a one-piece collet member which facilitates the assembly of the coupling.

Corrugated tubing, often fabricated of stainless steel, copper, or the like and jacketed with a plastic material, is commonly employed in residential or commercial building constructions as a transitional fluid conduit extending between an appliance or other machine and a rigid auxiliary line, pipe, or other connection of a fuel source which typically is natural gas, propane, or the like. The flexibility of such tubing facilitates the alignment of couplings and other connections, and also accommodates limited movement of the appliance or machine with respect to the rigid connection of the fuel source.

More recently, tubing of such type has been proposed as a substitute for traditional hard, i.e., inflexible, steel or iron "black" pipe in gas line applications for residential and commercial construction. Again, the flexibility of the tubing facilitates its installation through walls, ceilings, and floors and, especially, the alignment of the tubing connections. Such tubing, moreover, is lightweight, easy to carry, requires no threading or heavy equipment therefor, allows the use of fewer fitting connections, and exhibits less leak potential than conventional, hard piping. Corrugated tubing of the type herein involved additionally is used in other fluid transport applications such as in air conditioning, hydraulics, and general plumbing, and also as conduit for electrical applications. Tubing manufacturers include the Parflex Division of Parker-Hannifin Corp., Ravenna, OH, Titeflex Corp., Springfield, MA, OmegaFlex, Inc., Exton, PA, and Wardflex Manufacturing, Blossburg, PA.

It is common practice to terminate either or both of the distal ends of a length of corrugated tubing with a coupling for providing a leak-free connection or other transition, and/or for effecting a mechanical locking of the tubing ends limiting their movement under pressure or force. For example, U.S. Patent Nos. 5,441,312; 4,630,850; 4,674,775; and 2,323,912 disclose couplings of such type which generally comprise a sleeve and a cap nut. The sleeve and nut are coaxially received over a distal end of the tube for connection to a fitting associated with the auxiliary line or the appliance.

Young, U.S. Patent No. 2,549,741, discloses a pipe joint which includes a coupling nut adapted for a threaded connection with a spigot member. The coupling nut has an internal groove for receiving a split ring, and the spigot member has a conical surface for receiving the flared surface of a pipe. Upon the tightening of the nut on the spigot member, the split ring is made to compresses the flared pipe surface against the spigot.

Sasa et al., U.S. Patent No. 4,904,002, discloses a fluid coupling for a corrugated pipe which includes a body having a fluid passage, and an outer sleeve having a collar which retains a pair of C-rings. The outer sleeve is adapted to reduce the diameter of the C-rings such that the rings are forced into the root portions of the corrugated pipe wherein the rings are held axially in position.

Sasa et al., U.S. Patent No. 5,080,405, discloses another coupling for corrugated pipe which includes an inner cylindrical section having an annular groove for receiving a split ring. The groove extends from a forward flange portion to a rearward tapered surface which is formed on the groove. Upon the insertion of an end of the pipe into the cylindrical section, the ring is urged into a corrugation of the corrugated pipe by the tapered surface of the groove.

Sasa et al., U.S. Patent No. 5,292,156, discloses another fluid coupling for a corrugated pipe. The coupling includes a locking cylinder having a groove which accommodates the radial expansion of a ring received therein when the end of a corrugated pipe is inserted into the cylinder.

Hughes, U.K. Patent No. 1,371,609, discloses another joint for a corrugated pipe which includes a fitting to which a nut is threadably connected. The nut is formed as having a groove portion for retaining a split compression ring. Upon the insertion of an end of the pipe into the nut, the split ring is urged into a into a corrugation of the pipe. The nut then may be tightened on the fitting for drawing the pipe inward into a fluid-tight connection.

Marrison et al., U.S. Patent No. 5,226,682 discloses a coupling including a first and second member and an annular locking ring interposable therebetween. For receiving the locking ring, the first member is provided as having an exterior surface with a groove, and the second member is provided as having an inner surface with a cavity. The first and second members are secured together when the locking ring is engaged in the groove ands the cavity.

European Patent Application EP 0,331,116 discloses a connection device for securing an end of a corrugated pipe to a fitting. The device has an array of fingers which extend axially from an annular ring for insertion into the fitting. Enlarged portions at the inner ends of fingers engage the corrugations of the pipe and are received within corresponding recesses of the fitting to prevent the withdrawal of the pipe from the fitting.

French Patent Application FR 2,589,979, which is considered to be the closest prior art, discloses a connecting device for hoses having parallel corrugations. The device comprises a sleeve composed of two half sleeves and a nut that is slipped onto the sleeve and screwed onto an adapter. At one of its ends, the sleeve includes an exterior rim against which the nut abuts. The sleeve is positioned on the hose by means of a projection. Tightness is achieved by compressing the end of the tube between an end surface of the exterior rim of the sleeve and the confronting end of the adapter.

Another representative coupling for corrugated tubing is marketed commercially by OmegaFlex. Inc., Eaton, PA, under the tradename "AutoFlare™." As is described in the OmegaFlex Publication "TracPipe Flexible Gas Piping," Catalog TP197, such coupling involves a two-piece metal split ring which is received within a root of the tubing corrugation for retaining a fastening nut. An associated fitting is provided for a threaded connection with the nut as having a hardened sleeve. The sleeve effects a flaring of the first tubing corrugation to provided a seal with a corresponding tapered surface of the fitting as the tubing end is drawing toward the fitting by the nut.

Yet another representative coupling for corrugated tubing is marketed commercially by Titeflex Corp., Springfield, MA. As is described in the Titeflex publication "Gastite™ Design and Installation Guide," April 1996, such coupling employs a two-piece metal split ring for positioning a swivel nut. The nut is slidably mounted over the end of the tubing, and the split rings are positioned in the valley, i.e., root or trough, of the first convolution of the corrugations. The nut then is advanced toward the end of the tubing to capture the split rings. A socket flaring tool next is threaded into the nut and tightened. The tightening of the flaring tool compresses the first convolution of the tubing to form a flared seat. The nut lastly is threadably engaged with a corresponding end of the fitting.

However, the provision of two-piece split rings has been observed to complicate the assembly of the coupling. For example, as being of a relatively small size and separate from the nut, the rings are often lost or simply forgotten during installation. One or both of the rings additionally may fall out of the tubing prior to the connection of the nut to the fitting. If either of the rings is accidentally omitted, the tubing cannot be sealed to the fitting and a hazardous leak may result.

As the use of corrugated tubing in gas line and other fluid transfer applications continues to increase, it will be appreciated that further improvements in the design of couplings therefor would be well-received by both industry and consumers alike. A preferred design would be economical to manufacture, but would also simplify the assembly of the coupling while providing a connection which minimizes the potential for leaks and the like.

In view of the foregoing, it will be appreciated that improvements in the design of couplings for corrugated tubing would be well-received by both industry and consumers alike. A preferred design would simplify the assembly of the coupling while providing a connection which minimizes the potential for leaks and the like.

### SUMMARY OF THE INVENTION

The present invention is directed to a coupling for connecting a distal end of a corrugated tubing with a fitting according to claim 1.

Advantages of the present invention include a coupling construction for corrugated tubing which simplifies assembly. Additional advantages include a coupling construction which provides for the positive positioning and retention of a one-piece collet on the tubing, and which effects a fluid-tight or other secure connection of the tubing to an associated fitting. These and other advantages will be readily apparent to those skilled in the art based upon the disclosure contained herein.

### BRIEF DESCRIPTION OF THE DRAWINGS

For a fuller understanding of the nature and objects of the invention, reference should be had to the following detailed description taken in connection with the accompanying drawings wherein:
Fig. 1 is an exploded, perspective view of a coupling for corrugated tubing in accordance with the present invention;
Fig. 2 is a front view showing the collet of Fig. 2 in enhanced detail;
Fig. 3 is a cross-sectional view of the collet of Fig. 2 taken through line 3-3 of Fig. 2;
Fig. 4 is a schematic, partial longitudinal cross-sectional view showing the coupling of Fig. 1 as assembled for connection of the distal end of the corrugated tubing to an associated fitting;
Fig. 5 is a schematic, partial longitudinal cross-sectional view showing the final assembly of the coupling of Fig. 1 as connected to the fitting;
Fig. 6 is a partial cross-section view of an alternative embodiment of a coupling assembly according to the present invention which includes a modified fitting;
Fig. 7 is a partial longitudinal cross-sectional view showing the coupling of Fig. 6 as connected to the modified fitting of the invention;
Fig. 8 is a cross-sectional view of another alternative coupling assembly according to the present invention which includes a fitting that is further modified;
Fig. 9 is a cross-sectional view showing the coupling of Fig. 8 as received over a distal end of a length of corrugated tubing of the connection of the tubing to the modified fitting; and
Fig. 10 is a cross-sectional view showing the final assembly of the coupling of Fig. 9 as connecting the tubing distal end to the modified fitting.

The drawings will be described further in connection with the following Detailed Description of the Invention.

### DETAILED DESCRIPTION OF THE INVENTION

For the purposes of the discourse to follow, the precepts of the invention herein involved are described in connection with a corrugated tubing coupling and assembly therefor particularly adapted for use in fuel gas line applications in residential or commercial construction such as for coupling an appliance or the like to a fuel gas source. It will be appreciated, however, that aspects of the present invention may find utility in other conduit systems, whether for fluids or for electrical or other applications which utilize corrugated tubing. Use within those systems therefore should be considered to be expressly within the scope of the present invention.

Referring then to the figures wherein corresponding reference characters are used to designate corresponding elements throughout the several views, shown generally at 10 is an assembly according to the present invention for connecting the distal end, 12, of a length of corrugated tubing, represented generally at 14, in fluid communication with a fitting, represented generally at 16. Fitting 16, which is formed of a generally tubular body, 17, with an axial bore, 18, therethrough, is shown to be of a variety having an externally-threaded forward coupling end, 20, which terminates in a generally forwardly-tapered surface, 22. The rearward end, 24, of fitting 16 similarly may be externally-threaded for connection to an auxiliary line of a fuel source, to an appliance or the like (not shown), or to another conduit. Indeed, a pair of fittings 16 may be provided for either end of tubing 14 which may be employed as a transitional fluid conduit between the appliance and the fuel source. Body 17 of fitting 16 additionally may be formed as having a radial flange, 26, with hexagonal flats portion, one of which is referenced at 28, configured for engagement with a wrench or other tool during installation or connection.

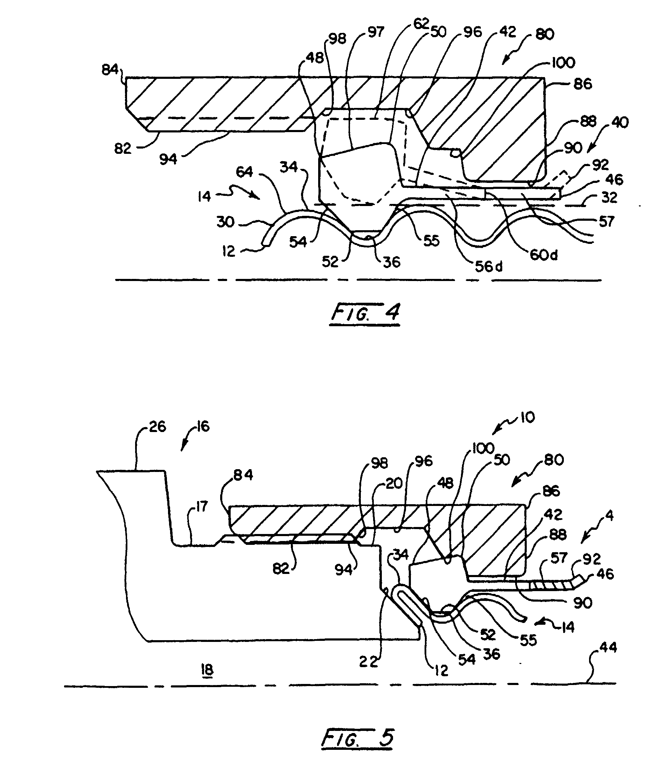

Tubing 14, which may be constructed of stainless steel or another metallic material, is conventionally formed of a sinusoidal series of uniform corrugations or convolutions, a first one of which is referenced at 30. As may be best seen through momentary reference to Fig. 4 wherein a partial longitudinal cross-sectional view of tubing 14 is shown in schematic, the convolutions define alternating crest portions which, as is shown at 32, define the outer periphery of tubing 14, and root or trough portions which extend radially inwardly from outer periphery 32. Distal end 12 of tubing 14 is formed by sectioning through, preferably centrally, one of the root portions of the tubing to terminate at about or along a first crest portion, 34, having an associated first root portion, 36.

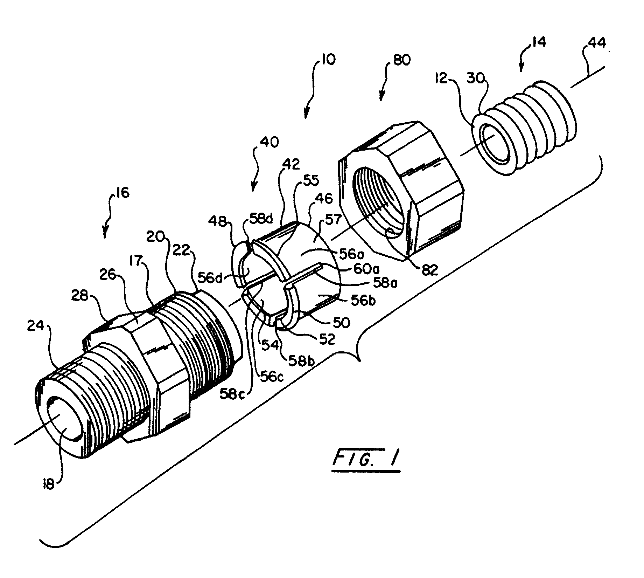

Returning to Fig. 1, assembly 10 includes, in accordance with the precepts of the present invention, a coupling which, in turn, includes a generally annular collet member, represented generally at 40, and an associated fastening member, represented generally at 80. Fastener 80 may be provided as a hexagonal cap nut which, as is shown at 82, is internally-threaded for a removable engagement with coupling end 20 of fitting 16.

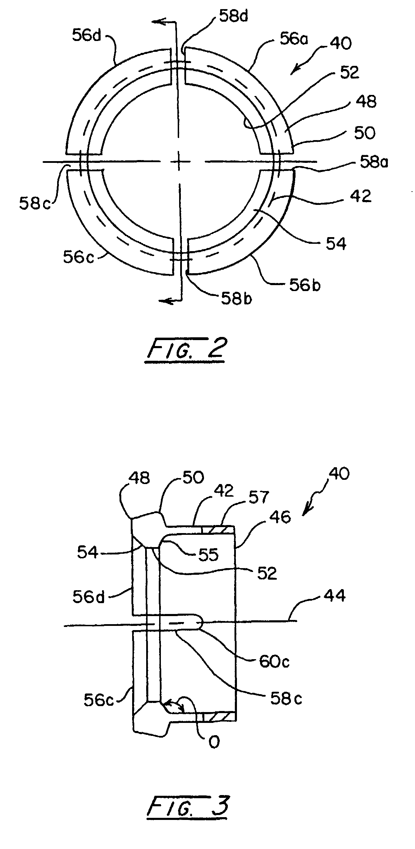

Collet 40 is formed as having a circumferential wall portion, 42, of a first diameter which is receivable coaxially over distal end 12 of tubing 14. Wall portion 42 extends axially along a longitudinal axis, represented at 44, from a forward first end, 46, to a rearward second end 48. As may be better appreciated through additional reference to Figs. 2 and 3 wherein collet 40 is shown in enhanced detail, second end 48 is configured as having a radially outwardly-extending outer portion, 50, and a radially inwardly-extending inner portion, 52, of a second diameter which is smaller than the outer periphery 32 (Fig. 4) of tubing 14. Inner portion 52, in turn, is configured to be receivable within a root portion of tubing 14 for retaining collet 40 thereon during assembly, and additionally presents a generally rearwardly-facing, ramped compression surface, 54, and a generally forwardly-facing, ramped camming surface, 55. As is shown, camming surface 55 may be radiused to define an angle, referenced at 2, of about 115E with respect to the inner surface of wall portion 42.

Collet wall portion 42 is longitudinally dissected through second end 48 thereof into at least a pair of arcuate, cantilevered segments, four of which are referenced at 56a-d, which extend from a generally circumferentially-continuous tang portion, 57, of collet 40. In the embodiment illustrated, wall portion 42 is longitudinally dissected into segments 56 by a corresponding number of rebates or slots, 58a-d. Each of rebates 58 extends as is shown in Fig. 1 for rebate 58a and in Fig. 3 for rebate 58c through collet second end 48 to terminate at a proximal end, 60a and 60c, respectively, disposed intermediate second end 48 and first end 46 of collet 40. For symmetry, rebates 58 may be equally spaced-apart radially about longitudinal axis 44 to dissect collet 40 into at least a pair of equal segments 56. The preferred number of segments 56 may vary as generally depending upon the nominal diameter of collet 40, but typically will be between from two and eight.

Looking next to Fig. 4, as is shown in phantom at 62 for segment 56d, each of segments 56 are provided to be resiliently yieldable or pivotable for radial outward movement relative to longitudinal axis 44. It will be appreciated that this movement, which is responsive to the bearing of collet camming surface 55 along the crest portions of the tubing, allows at least first crest portion 34 of tubing 14 to be received through second end 48 of collet wall portion 42 as collet 40 is advanced forwardly over the distal end 12 of tube 14. The forwardly-inclining orientation of camming surface 55 with respect to, for example, the upwardly sloping surface 64 of tubing crest portion 34 develops a force vector having a normal component which is directed on collet segments 56 radially outwardly from longitudinal axis 44.

By "resiliently yieldable," it is meant that after collet second end 48 is advanced over at least tubing first crest portion 34, each of segments 56 is biased to return to its normal orientation. Collet second end inner portion 52 thereby is receivable within one of the root portions of tubing 14 such as first root portion 36. In this way, collet 40 advantageously may be provided as a one-piece component which is positively positioned and retained on tubing 14 to facilitate assembly.

Fastener 80 is journaled over the second end 48 of collet 40 for a threaded engagement with coupling end 20 of fitting 16 (Fig. 1) drawing collet 40 and tubing distal end 12 toward fitting 16. In general configuration, fastener 80 may be conventionally formed as extending from an open rearward end, 84, to a forward end, 86, which includes a radially inwardly-projecting flange or collar portion, 88, having an opening, referenced at 90, which is sized to receive collet first end 46 and tubing outer periphery 32 concentrically therethrough. Prior to the mounting of collet 40 over tubing distal end 12, it is preferred that fastener 80 and collet 40 are pre-assembled by inserting collet first end 46 through fastener opening 90. In this regard, and as is shown in phantom at 92, collet first end 46 may be flared such that fastener 80 is slidably retained on collet 40 intermediate first and second ends 46 and 48 thereof. Alternatively, collet 40 may be staked into fastener 80, or a slot may be provided on an inner surface of the fastener for receiving a corresponding lip or flange of the collet.

Fastener 80 additionally is formed as having an inner radial surface, 94, a portion of which may define threads 82. From threaded portion 82, radial surface 94 extends to a rearward portion, 96, which is sized radially to accept the outward movement of collet segments 56 as collet 40 is advanced over the distal end 12 of tubing 14. As is shown at 97, it is preferred that collet second end outer portion 50 is generally inclined or angled forwardly to maximize its clearance when pivoted with the inner radial surface 94 of fastener 80. It additionally is preferred that rearward portion 96 of radial surface 94 is configured as a generally circumferentially-continuous annular groove which may have a forwardly-facing shoulder portion, 98. Depending upon the length of collet tang portion 57 and the relative inner diameter of fastener radial surface 94 to the outer diameter of collet 40 , the rearward movement of collet 40 relative to tubing 14 may be delimited by shoulder portion 98 and/or collet second end flare 92 as the collet is advanced forwardly over tubing distal end 12 during assembly.

From rearward portion 96, fastener inner radial surface 94 further extends forwardly to a rearwardly-facing shoulder portion, 100. As may be seen with reference to Fig. 5, shoulder portion 100 is configured to abuttingly engage outer portion 50 of collet second end 48 when inner portion 52 thereof is received within one of the root portions, such as first root portion 36, of tubing 14.

Continuing then with Fig. 5, assembly 10 is illustrated with the internal threads 82 of fastener 80 being engaged with the external threads of coupling end 20 of fitting 16 drawing distal end 12 of tubing 14 into a removable fluid or other connection with fitting throughbore 18. In this regard, as fastener open end 84 is rotated onto fitting coupling end 20, the abutting engagement of collet second end outer portion 50 by fastener shoulder portion 100 urges collet 40 rearwardly toward fitting 16. Concomitantly, and as is shown, at least the first crest portion 34 of tubing 14 is collapsed and compressed between the tapered surface 22 of fitting 16 and the compression surface 54 of collet 40 in a fluid-tight or other sealing engagement. Alternatively, and as is known in the art, crest portion 34 may be collapsed prior to connection using a flaring tool or the like (not shown). To facilitate the effecting of a fluid-tight or other seal, it is preferred that collet compression surface 54 is rearwardly inclined or angled for disposition generally parallel to fitting tapered surface 22. Although it is preferred that only the first crest portion 34 of tubing 14 is compressed between the fitting 16 and collet 40, any number of corrugations 30 left projecting beyond the collet may be so compressed as collapsed prior to or concomitantly with the connection of assembly 10 to fitting 16. To disconnect tubing 14 from fitting 16, the coupling sequence is simply reversed.

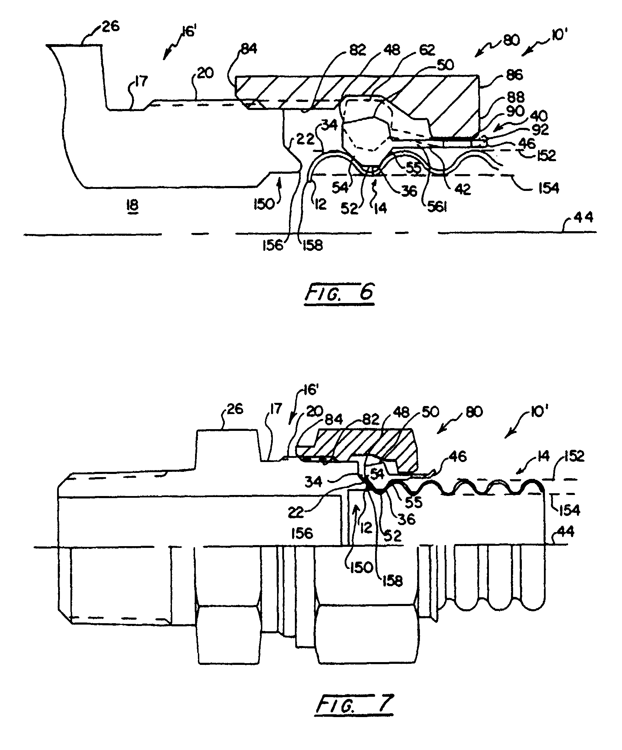

Looking next to Fig. 6, an alternative embodiment of coupling assembly 10 of the present invention is shown generally at 10' as including a modified fitting, 16'. In further accordance with the precepts of the present invention, the forward coupling end 20 of fitting 16' is modified to include a counterbore, referenced at 150, which is formed at the forward opening end of axial bore 18. Tapered surface 22 terminates at counterbore 150 to define a generally annular, forwardly-presenting radial land portion, 156, which is sized to confront the first crest portion 34 of tube 14 intermediate the major and minor diametric extents, shown respectively at 152 and 154, of the tube. As may be seen with additional reference to Fig. 7, wherein fastening member 80 and fitting 16' are shown as threadably engaged to draw the distal end 12 of tubing 14 into a removable fluid or other connection with fitting throughbore 18, the tube first crest portion 34 thereby is collapsed and compressed between the land portion 156 of fitting 16' and the compression surface 54 of collet 40 in a flared fluid-tight or other sealing engagement.

It will be appreciated that the addition of land portion 156 advantageously displaces the contact point between the first crest portion 34 of the tubing and the fitting surface 22 radially outward to effect the flaring compression of the tube distal end intermediate the major and minor diametric extents thereof. In this regard, as tube 14 typically is cut to length with a conventional C-clamp type tubing cutter or the like, the incised or cut end of the tube, which may be seen at 158 to extend radially inwardly of the tube minor diameter 154, presents at least the potential for scratching or otherwise damaging surface 22. As such damage could affect the fluid-tight seal between fitting surface 22 and the collapsed crest portion 34 of the tube, a more reliable seal is provided by virtue of the described sealing compression of the tube intermediate its major and minor diameters which avoids the incorporation of its cut end 158 into the joint.

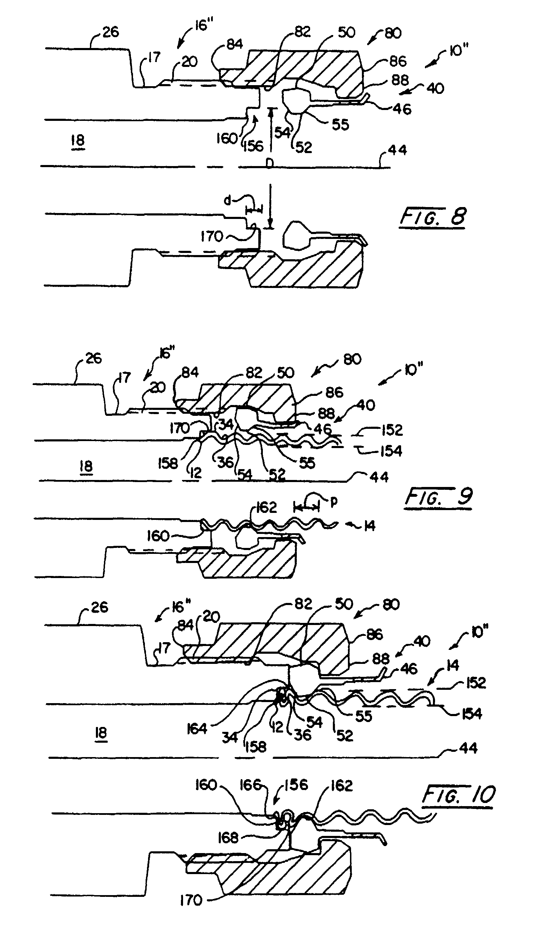

Turning to Figs. 8 and 9, another alternative embodiment of coupling assembly 10 of the present invention which affords a self-piloting feature is shown generally at 10" as including modified fitting 16". In such embodiment, the forward coupling end 20 of fitting 16" includes counterbore 150, but is configured without tapered surface 22 or land portion 156. Rather, counterbore 150 is configured to receive at least a portion of the first crest portion 34 therein as having a diameter, referenced at "D" in Fig. 8, which is about 0.0127-0.0635 cm (0.005-0.025 inch) larger than the tube major diameter 152, and as having an axial depth, referenced at "d" in Fig. 8 which is at least one-half of the tube corrugation pitch dimension which is referenced at "p" in Fig. 9. Counterbore 150 further is configured to define as internal, forwardly-presenting surface or step, 160, which extends within the fitting bore 18 radially about axis 44. As is detailed hereafter, internal step 160 provides a both a positive stop and a sealing surface for the tube distal end 12.

As is shown in Fig. 8, although optional, it is preferred for ease of assembly and to assure proper tube depth insertion that fastening member 80 and fitting 16" are pre-engaged by partially threading surface 82 of the fastening member onto the first thread of fitting forward coupling end 20. A conventional thread locking material, such as a Loctite Type 292™, may be used to temporarily affix the fastening member to the fitting. Continuing to Fig. 9, with collet 40 coaxially received within fastener 80 and with the fastener pre-engaged with the fitting in the manner described, tube distal end 12 may be inserted through the forward end 86 of the fastener until a positive stop with internal step 160 is established disposing collet inner portion 52 within, for example, the third root portion, 162, of the tube. It will be appreciated that the pre-assembling of the coupling automatically effects the desired tube depth insertion. Alternatively, visual inspection may be used to confirm the tube has been inserted the proper amount into the fastening member and fitting.

Proceeding to Fig. 10, the assembly of coupling 10" continues with the compression of the first corrugation 34 and second corrugation, 164, of the tube to effect a fluid-tight sealing thereof to the internal surface 160 of the fitting. In this regard, with the tube 14 properly positioned within the fastener and fitting, fastener 80 may be rotated into a further threaded engagement with fitting forward end 20 drawing the tube distal end 12 into a removable fluid or other connection with fitting throughbore 18. As the drawing proceeds, the first and second crest portion 34 and 164 of the are collapsed and compressed in an "accordion" fluid-tight or other sealing arrangement between fitting internal step 160 and the compression surface 54 of collet 40. In such an arrangement, multiple or redundant sealing surfaces advantageously are provided, such as the radial seal shown at 166 effected between the contact surfaces of the tube and fitting step 160, and the axial seal shown at 168 effected between the apex of tube first crest portion 134 and the inner radial surface, 170, of counterbore 156.

Thus, a unique coupling construction for corrugated tubing is described herein which facilitates and simplifies assembly, and which may be used to achieve a fluid-tight or other secure connection in a single operation. Such construction additionally is adapted for use with existing fittings as may be associated with an appliance, fuel line, or the like.

Materials of construction for tubing 14, fitting 16, collet 40, and fastener 80 are to be considered conventional for the uses involved. Such materials generally will be corrosion resistant, but particularly will depend upon the fluid or fluids being handled. A metal material such as a mild or stainless steel or brass is preferred for durability, although other types of materials such as plastics may be substituted, however, again as selected for compatibility with the fluid being transferred or for desired mechanical properties.

As it is anticipated that certain changes may be made in the present invention without departing from the precepts herein involved, it is intended that all matter contained in the foregoing description shall be interpreted in as illustrative rather than in a limiting sense.

## Claims

1. A coupling for connecting a distal end (12) of a corrugated tube (14) with a fitting (16) of a variety having a forward coupling end (20), the tube (14) being formed of a series of corrugations (30) which define alternating crest portions (34) defining the outer periphery (32) of the tube (14) and root portions (36), said coupling comprising a generally annular collet member (40) receivable coaxially over the distal end (12) of the tube (14) including a circumferential wall portion (42) extending axially along a longitudinal axis (44) from a forward first end (46) to a rearward second end (48) configured as having a radially-outwardly extending outer portion (50) and a radially inwardly-extending inner portion (52) of a diameter smaller than the outer periphery (32) of the tube (14), said inner portion (52) configured to be receivable within the root portions (36) of the tube (14) for retaining said collet member (40) thereon and presenting a generally rearwardly-facing compression surface (54) and a generally forwardly-facing camming surface (55), and a fastening member (80) journalable over said collet member (40) first end (46) and engagable with the coupling end (20) of the fitting (16) to draw said collet member (40) and the distal end (12) of the tube (14) toward the fitting (16) or the collet (40) is drawn over a preinserted tube distal end (12), said coupling being characterized in that:
said wall portion (42) of said collet member (40) is longitudinally dissected through the second end (48) thereof into at least a pair of arcuate, cantilevered segments (56) each being resiliently yieldable responsive to the bearing of said collet camming surface (55) on the crest portions (34) of the tube (14) for radial outward movement relative to said longitudinal axis (44) allowing the crest portions (34) to be received through the second end (48) of said wall portion (42) as said collet member (40) is advanced forwardly over the distal end (12) of the tube (14) into retention within one of the root portions (36); and
said fastening member (80) has an inner radial surface (94) extending from a rearward portion (96) being sized radially to accept, with fastening member (80) journaled over said collet member (40) first end (46), the outward movement of said collet member (40) segments (56), to a rearwardly-facing shoulder portion (100) configured to abuttingly engage the outer portion (50) of said collet member (40) second end (48) when the inner portion (52) thereof is retained within one of the root portions (36) of the tube (14) for urging said collet member (40) rearwardly toward said fitting (16).

2. The coupling as in claim 1 wherein the fitting (16) forward coupling end (20) terminates in a generally forwardly tapered surface (22) and the distal end (12) of the tube (14) terminates at a first corrugation (30), and wherein at least the first corrugation (30) of the tube (14) distal end (12) is collapsed between the tapered surface (22) of the fitting (16) and the compression surface (54) of said collet member (40) as said collet member (40) is drawn toward the fitting (16).

3. The coupling as in claim 2 wherein said compression surface (54) of said collet member (40) is presented as a rearwardly-inclined ramped surface disposed generally parallel to the tapered surface (22) of the fitting (16).

4. The coupling as in claim 1 wherein said collet member (40) wall portion (42) is longitudinally dissected by at least a pair of rebates (58) each extending through said collet member (40) second end (48) to a proximal end (60) disposed intermediate said collet member (40) first and second ends.

5. The coupling as in claim 4 wherein said rebates (58) are equally spaced-apart radially about said longitudinal axis (44) to divide said collet member (40) into at least a pair of equal segments (56).

6. The coupling as in claim 1 wherein said collet member (40) is dissected into at least a pair of equal segments (56).

7. The coupling as in claim 1 wherein said fastening member (80) is a cap nut configured for a removable threaded engagement with the coupling end (20) of the fitting (16).

8. The coupling as in claim 1 wherein the rearward portion (96) of said fastening member (80) inner radial surface (94) is configured as a generally circumferentially-continuous annular groove.

9. The coupling as in claim 1 wherein fastening member (80) is slidably retained on said collet member (40) intermediate the first and second ends thereof.

## Patentansprüche

1. Verbindung zum Verbinden eines distalen Endes (12) eines Wellrohrs (14) mit einem Rohrverbindungsstück (16) einer Art mit einem Vorwärtsverbindungsende (20), wobei das Rohr (14) aus einer Reihe von Wellen (30) gebildet wird, die alternierende Scheitelteile (34), welche die Außenwandung (32) des Rohrs (14) ausbilden, und Bodenteile (36) bilden, wobei die Verbindung ein im Allgemeinen ringförmiges koaxial über dem distalen Ende (12) des Rohrs (14) aufnehmbares Klemmhülsenelement (40) umfasst, das einen sich axial entlang einer Längsachse (44) von einem vorderen ersten Ende (46) zu einem hinteren zweiten Ende (48) erstreckenden Umfangswandteil (42) beinhaltet, der so konfiguriert ist, dass er einen sich radial nach außen erstreckenden äußeren Teil (50) und einen sich radial nach innen erstreckenden inneren Teil (52) mit einem kleineren Durchmesser als der der Außenwandung (32) des Rohrs (14) aufweist, wobei der innere Teil (52) so konfiguriert ist, dass er in den Bodenteilen (36) des Rohrs (14) zum Halten des Klemmhülsenelements (40) daran sowie zum Bilden einer im Allgemeinen nach hinten weisenden Klemmfläche (54) und einer im Allgemeinen nach vorne weisenden Steuerkurvenfläche (55) aufnehmbar ist, sowie mit einem Befestigungselement (80), das über dem erste Ende (46) des Klemmhülsenelements (40) drehbar lagerbar und mit dem Verbindungsende (20) des Rohrverbindungsstücks (16) einrückbar ist, um das Klemmhülsenelement (40) und das distale Ende (12) des Rohrs (14) in Richtung auf das Rohrverbindungsstück (16) zu ziehen, oder die Klemmhülse (40) wird über das distale Ende (12) eines voreingesetzten Rohrs gezogen, wobei die Verbindung dadurch gekennzeichnet ist, dass:
- der Wandteil (42) des Klemmhülsenelements (40) durch dessen zweites Ende (48) in Längsrichtung in mindestens ein Paar bogenförmiger, vorgekragter Segmente (56) unterteilt ist, die jeweils elastisch nachgebend in Reaktion auf das Lagern der Klemmhülsen-Steuerkurvenfläche (55) auf den Scheitelteilen (34) des Rohrs (14) für eine radiale Bewegung nach außen relativ zu der Längsachse (44) sind, was es den Scheitelteilen (34) ermöglicht, durch das zweite Ende (48) des Wandteils (42) aufgenommen zu werden, wenn das Klemmhülsenelement (40) über das distale Ende (12) des Rohrs (14) nach vorne in die Haltestellung in einem der Bodenteile (36) vorbewegt wird; und dass
- das Befestigungselement (80) eine innere radiale Fläche (94) aufweist, die sich von einem hinteren Teil (96), der radial so bemessen ist, dass er bei drehbarem Lagern des Befestigungselements (80) über dem ersten Ende (46) des Klemmhülsenelements (40) die Bewegung der Segmente (56) des Klemmhülsenelements (40) nach außen aufnimmt, zu einem nach hinten weisenden Absatzteil (100) erstreckt, der so konfiguriert ist, dass er mit dem äußeren Teil (50) des zweiten Endes (48) des Klemmhülsenelements (40) anliegend greift, wenn dessen innerer Teil (52) in einem der Bodenteile (36) des Rohrs (14) zum Drücken des Klemmhülsenelements (40) nach hinten in Richtung auf das Rohrverbindungsstück (16) gehalten ist.

2. Verbindung nach Anspruch 1, dadurch gekennzeichnet, dass das vordere Verbindungsende (20) des Rohrverbindungsstücks (16) in einer im Allgemeinen nach vorne verjüngten Fläche 22 endet und das distale Ende (12) des Rohrs (14) an einer ersten Welle (30) endet, und dass mindestens die erste Welle (30) des distalen Endes (12) des Rohrs (14) zwischen der verjüngten Fläche (22) des Rohrverbindungsstücks (16) und der Klemmfläche (54) des Klemmhülsenelements (40) zusammengedrückt wird, wenn das Klemmhülsenelement (40) in Richtung auf das Rohrverbindungsstück (16) gezogen wird.

3. Verbindung nach Anspruch 2, dadurch gekennzeichnet, dass die Klemmfläche (54) des Klemmhülsenelements (40) als nach hinten geneigte, abgeschrägte Fläche ausgebildet ist, die im Allgemeinen parallel zur verjüngten Fläche (22) des Rohrverbindungsstücks (16) angeordnet ist.

4. Verbindung nach Anspruch 1, dadurch gekennzeichnet, dass das Wandteil (42) des Klemmhülsenelements (40) in Längsrichtung durch mindestens ein Paar Einschnitte (59) geteilt ist, die sich jeweils durch das zweite Ende (48) des Klemmhülsenelements (40) auf ein zwischen dem ersten und zweiten Ende des Klemmhülsenelements (40) angeordnetes proximales Ende (60) hin erstrecken.

5. Verbindung nach Anspruch 4, dadurch gekennzeichnet, dass die Einschnitte (58) radial um die Längsachse (44) gleichmäßig beabstandet sind, um das Klemmhülsenelement (40) in mindestens ein Paar gleicher Segmente (56) zu unterteilen.

6. Verbindung nach Anspruch 1, dadurch gekennzeichnet, dass das Klemmhülsenelement (40) in mindestens ein Paar gleicher Segmente (56) unterteilt ist.

7. Verbindung nach Anspruch 1, dadurch gekennzeichnet, dass das Befestigungselement (80) eine Überwurfmutter ist, die für einen lösbaren Gewindeeingriff mit dem Verbindungsende (20) des Rohrverbindungsstücks (16) konfiguriert ist.

8. Verbindung nach Anspruch 1, dadurch gekennzeichnet, dass der hintere Teil (96) der inneren radialen Fläche (94) des Befestigungselements (80) als eine im Allgemeinen um den Umfang kontinuierlich umlaufende ringförmige Nut konfiguriert ist.

9. Verbindung nach Anspruch 1, dadurch gekennzeichnet, dass das Befestigungselement (80) an dem Klemmhülsenelement (40) zwischen dessen ersten und zweiten Ende gleitend gehalten ist.

## Revendications

1. Joint pour connecter une extrémité distale (12) d'un tube ondulé (14) à une adaptation (16), du type comportant une extrémité de joint avant (20), le tube (14) étant formé d'une série d'ondulations (30) qui définissent des parties de crêtes alternées (34) formant la périphérie extérieure (32) du tube (14), et des parties en creux (36), le joint comprenant un élément de collet généralement annulaire (40) pouvant venir se loger coaxialement sur l'extrémité distale (12) du tube (14), comprenant une partie de paroi circonférentielle (42) s'étendant axialement le long d'un axe longitudinal (44) d'une première extrémité avant (46) vers une seconde extrémité arrière (48), cette partie étant configurée pour comporter une partie extérieure s'étendant radialement vers l'extérieur (50) et une partie intérieure s'étendant radialement vers l'intérieur (52) de diamètre plus petit que la périphérie extérieure (32) du tube (14), la partie intérieure (52) étant configurée pour pouvoir venir se loger dans les parties en creux (36) du tube (14) de manière à retenir l'élément de collet (40) sur celle-ci, en présentant une surface de compression généralement tournée vers l'arrière (54) et une surface de came généralement tournée vers l'avant (55), tandis qu'un élément de fixation (80) pouvant être monté en rotation sur la première extrémité (46) de l'élément de collet (40) et pouvant s'engager sur l'extrémité de joint (20) de l'adaptation (16) pour tirer l'élément de collet (40) et l'extrémité distale (12) du tube (14) vers l'adaptation (16) ou le collet (40), est tiré sur une extrémité distale préintroduite (12) du tube,
caractérisé en ce que
- la partie de paroi (42) de l'élément de collet (40) est découpée longitudinalement à travers sa seconde extrémité (48), en au moins une paire de segments courbes en porte-à-faux (56) qui sont chacun élastiquement souples en réponse au support de la surface de came (55) du collet sur les parties de crêtes (34) du tube (14), pour effectuer un mouvement radial vers l'extérieur par rapport à l'axe longitudinal (44), en permettant aux parties de crêtes (34) d'être reçues dans la seconde extrémité (48) de la partie de paroi (42) lorsqu'on fait avancer l'élément de collet (40) vers l'avant sur l'extrémité distale (12) du tube (14) pour le retenir à l'intérieur de l'une des parties en creux (36) ; et
- l'élément de fixation (80) comporte une surface radiale intérieure (94) s'étendant depuis une partie arrière (96) dimensionnée radialement pour recevoir, avec l'élément de fixation (80) monté en rotation sur la première extrémité (46) de l'élément de collet (40), le mouvement vers l'extérieur des segments (56) de l'élément de collet (40), jusqu'à une partie d'épaulement tournée vers l'arrière (100) qui est configurée pour s'engager en butée contre la partie extérieure (50) de la seconde extrémité (48) de l'élément de collet (40) lorsque sa partie intérieure (52) est retenue dans l'une des parties en creux (36) du tube (14), de manière à pousser l'élément de collet (40) vers l'arrière en direction de l'adaptation (16).

2. Joint selon la revendication 1,
dans lequel
- l'extrémité de joint avant (20) de l'adaptation (16) se termine par une surface généralement conique allant en s'amincissant vers l'avant (22), et l'extrémité distale (12) du tube (14) se termine à l'endroit d'une première ondulation (30), et
- au moins la première ondulation (30) de l'extrémité distale (12) du tube (14) est affaissée entre la surface conique (22) de l'adaptation (16) et la surface de compression (54) de l'élément de collet (40) lorsque cet élément de collet (40) est tiré vers l'adaptation (16).

3. Joint selon la revendication 2,
dans lequel
la surface de compression (54) de l'élément de collet (40) se présente comme une surface en forme de rampe inclinée vers l'arrière et disposée généralement parallèlement à la surface conique (22) de l'adaptation (16).

4. Joint selon la revendication 1,
dans lequel
la partie de paroi (42) de l'élément de collet (40) est découpée longitudinalement par au moins une paire de rainures (58) s'étendant chacune à travers la seconde extrémité (48) de l'élément de collet (40), jusqu'à une extrémité proximale (60) disposée dans une position intermédiaire entre la première extrémité et la seconde extrémité de l'élément de collet (40).

5. Joint selon la revendication 4,
dans lequel
les rainures (58) sont également espacées radialement les unes des autres autour de l'axe longitudinal (44) pour diviser l'élément de collet (40) en au moins une paire de segments égaux (56).

6. Joint selon la revendication 1,
dans lequel
l'élément de collet (40) est découpé en au moins une paire de segments égaux (56).

7. Joint selon la revendication 1,
dans lequel
l'élément de fixation (80) est un écrou de capuchon configuré pour se visser de manière amovible sur l'extrémité de joint (20) de l'adaptation (16).

8. Joint selon la revendication 1,
dans lequel
la partie arrière (96) de la surface radiale intérieure (94) de l'élément de fixation (80) est configurée sous la forme d'une rainure annulaire généralement continue circonférentiellement.

9. Joint selon la revendication 1,
dans lequel
l'élément de fixation (80) est retenu en glissement sur l'élément de collet (40) dans une position intermédiaire entre sa première extrémité et sa seconde extrémité.
